# EUROPEAN PATENT SPECIFICATION

(11) **EP 4 366 010 B1**
(45) Date of publication and mention of the grant of the patent: **02.07.2025**
(21) Application number: 23206521.9
(22) Date of filing: 27.10.2023
(51) Int. Cl.: H01M 10/04, H01M 10/42, H01M 10/635, H01M 50/264

(54) **PRESSURE MAINTENANCE DEVICE AND BATTERY SYSTEM INCLUDING THE SAME**
DRUCKWARTUNGSVORRICHTUNG UND BATTERIESYSTEM DAMIT
DISPOSITIF DE MAINTIEN DE PRESSION ET SYSTÈME DE BATTERIE LE COMPRENANT

(30) Priority: 02.11.2022 KR 20220144581
(43) Date of publication of application: 08.05.2024
(73) Proprietor: Samsung SDI Co., Ltd., Yongin-si, Gyeonggi-do 17084 (KR)
(72) Inventor: HONG, Hyeoksoo, 17084 Yongin-si (KR)
(74) Representative: Marks & Clerk LLP

(56) References cited:
- EP-A1- 3 886 202
- EP-A1- 4 037 079
- WO-A1-2022/035080
- US-A1- 2022 077 550

## Description

### BACKGROUND

### 1. Field

Aspects of embodiments of the present disclosure relate to a pressure maintenance device and a battery system including the same.

### 2. Description of Related Art

A secondary battery is a battery that is designed to be repeatedly charged and discharged and differs from a primary battery, which is designed to provide an irreversible conversion of chemical energy to electrical energy. A low-capacity secondary battery is often used as a power supply for a small electronic device, such as a mobile phone, a laptop computer, or a camcorder, while a high-capacity secondary battery is often used as a power supply for a hybrid vehicle or the like.

Generally, a secondary battery cell includes an electrode assembly including a positive electrode, a negative electrode, and a separator interposed between the positive electrode and the negative electrode, a case accommodating the electrode assembly, and an electrode terminal electrically connected to the electrode assembly. An electrolyte solution is injected into the case to enable charging and discharging of the battery cell due to an electrochemical reaction between the positive electrode, the negative electrode, and the electrolyte solution. A shape of the case, such as a cylindrical or rectangular shape, varies depending on the desired use or application of the battery cell.

The secondary battery cell repeatedly contracts and expands due to repeated charging and discharging such that a direct fatigue load is applied to a battery structure. In addition, the secondary battery cell may continuously expand as the electrode assembly deteriorates, and a pressure applied to the battery structure may increase in later life stages of the cell compared with an early life stage of the cell due to the continuous expansion such that a safety problem may occur due to performance degradation and structural deformation.

US-A-2022077550 discloses a secondary battery module capable of constantly maintaining a surface pressure of a battery cell. The secondary battery module of the present invention includes a battery stack in which a plurality of battery cells are stacked; a case in which the battery stack is accommodated; a pressure pad disposed to be in contact with the battery cells constituting the battery stack and having a volume which is adjusted; and a pressure adjusting unit that adjusts the volume of the pressure pad in response to a measured pressure, thereby constantly maintaining the pressure applied to the battery cell.

### SUMMARY

Embodiments of the present disclosure provide a pressure maintenance device for maintaining a constant internal pressure of a battery structure even if a volume of a battery cell changes and a battery system including the pressure maintenance device.

The invention provides a pressure maintenance device and a battery system as set forth in the claims.

### BRIEF DESCRIPTION OF THE DRAWINGS

FIG. 1 is a schematic diagram of a battery system including a pressure maintenance device according to embodiments of the present disclosure.
FIG. 2 is a schematic diagram of a battery system including a pressure maintenance device according to other embodiments of the present disclosure.
FIG. 3 is a schematic diagram of a battery system including a pressure maintenance device according to other embodiments of the present disclosure.

### DETAILED DESCRIPTION

Embodiments of the present disclosure will now be described, in detail, in connection with the accompanying drawings. Aspects and features of embodiments, and manners of providing the same, will now be described in detail with the accompanying drawings. As those skilled in the art would realize, the described embodiments may be modified in various different ways, all without departing from the scope of the present disclosure. The embodiments are provided as examples so that the present disclosure may be thorough and complete, and will sufficiently describe aspects and features of the present disclosure to a person skilled in the art.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

The controller and/or any other relevant devices or components according to embodiments of the present disclosure described herein may be implemented utilizing any suitable hardware, firmware (e.g., an application-specific integrated circuit), software, and/or a suitable combination of software, firmware, and hardware. For example, the various components of the controller may be formed on one integrated circuit (IC) chip or on separate IC chips. Further, the various components of the controller may be implemented on a flexible printed circuit film, a tape carrier package (TCP), a printed circuit board (PCB), or formed on a same substrate as the controller. Further, the various components of the controller may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device or the functionality of a particular computing device may be distributed across one or more other computing devices without departing from the scope of the embodiments of the present disclosure.

Hereinafter, a pressure maintenance device, according to embodiments of the present disclosure, and a battery system including the pressure maintenance device will be described, in detail, with reference to necessary drawings.

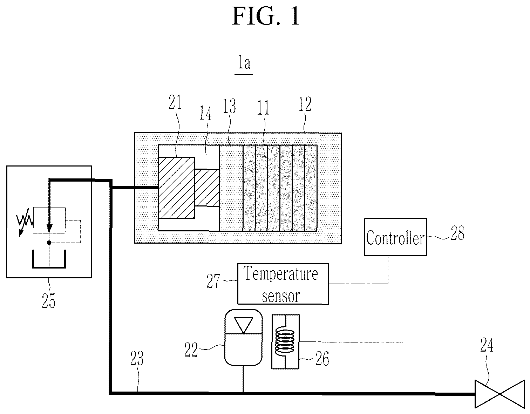

FIG. 1 is a schematic diagram of a battery system including a pressure maintenance device according to embodiments of the present disclosure.

Referring to FIG. 1, the battery system 1a, according to an embodiment, may include a battery module and a pressure maintenance device of the battery module.

The battery module may include a plurality of battery cells 11 connected to each other in series and/or in parallel and a module housing 12 that is a structure accommodating the plurality of battery cells 11. The plurality of battery cells 11 may be disposed in a stacked arrangement inside the module housing 12.

An airtight space (e.g., an inner space or a compartment) 14 may be formed inside the module housing 12. The plurality of battery cells 11 and a hydraulic device 21 of a pressure maintenance device 20, described in more detail below, may be accommodated in the inner space 14 of the module housing 12. A buffer plate 13 may be arranged between the hydraulic device 21 and the battery cells 11 in the inner space 14 of the module housing 12. The buffer plate 13 may be deformed or moved according to a change in a volume of one or more of the battery cells 11. The buffer plate 13 may be moved or deformed toward the battery cells 11 due to an expansion pressure from the hydraulic device 21 if the battery cells 11 contract. The buffer plate 13 may be moved or deformed toward the hydraulic device 21 due to an expansion pressure of the battery cells 11 during expansion of the battery cells 11.

The pressure maintenance device, according to an embodiment, may include the hydraulic device 21, an accumulator 22, a fluid pipe 23, a maintenance valve 24, a pressure reducing valve 25, a heater 26, a temperature sensor 27, and a controller 28.

The hydraulic device 21 may reduce or minimize a fatigue load of the module housing 12 by offsetting (e.g., canceling) pressure change inside the module housing 12 due to deformation (e.g., a change in the volume) of the battery cells 11. If the battery cells 11 contract (e.g., if one or more of the battery cells 11 contract), the hydraulic device 21 may expand to move or deform the buffer plate 13 toward the battery cells 11. If the battery cells 11 expand, the hydraulic device 21 may contract by the expansion pressure transferred from the battery cells 11 through the buffer plate 13.

The hydraulic device 21 may include a device (e.g., a hydraulic bag, a hydraulic cylinder, or the like) configured to expand and contract in response to a hydraulic pressure. The hydraulic device 21 may expand or contract through inflow and discharge of fluid (e.g., oil). If the hydraulic device 21 contracts, the fluid may be discharged from the hydraulic device 21. If the hydraulic device 21 expands, the fluid may flow into the hydraulic device 21.

The accumulator 22 may store a pressurized fluid and may offset a hydraulic pressure change caused by expansion and contraction of the hydraulic device 21. For example, if a hydraulic pressure change occurs inside the fluid pipe 23 due to the expansion or the contraction of the hydraulic device 21, the accumulator 22 may discharge the fluid to the fluid pipe 23 or may offset the hydraulic pressure change within the fluid pipe 23 by introducing the fluid of the fluid pipe 23 into the accumulator 22. If the battery cells 11 contract such that the hydraulic device 21 expands, the accumulator 22 may prevent a decrease in a hydraulic pressure by discharging the fluid to the fluid pipe 23. If the battery cells 11 expand so that the hydraulic device 21 contracts, the accumulator 22 may prevent an increase in the hydraulic pressure by introducing the fluid from the hydraulic device 21 into the accumulator 22. In some embodiments, an internal pressure of the accumulator 22 may change in proportion to a change in an internal pressure of the battery cells 11. For example, if the internal pressure of the battery cells 11 increases (e.g., the battery cells 11 expand), a pressure of the accumulator 22 may increase due to inflow of the fluid, and if the internal pressure of the battery cells 11 decrease (e.g., the battery cells 11 contract), the pressure of the accumulator 22 may decrease due to discharge of the fluid.

The fluid pipe 23 may extend through (or extend into) and may be coupled to the module housing 12. The fluid pipe 23 may be respectively connected to a fluid inlet/outlet of the hydraulic device 21 and a fluid inlet/outlet of the accumulator 22. The fluid pipe 23 may be a passage for fluid exchange between the hydraulic device 21 and the accumulator 22.

The maintenance valve 24 may be connected to a fluid inlet of the fluid pipe 23 to replenish the fluid inside the fluid pipe 23. The maintenance valve 24 may be manually or automatically operated.

The maintenance valve 24 may be opened by a manual operation of a user to supply the fluid to the inside of the fluid pipe 23.

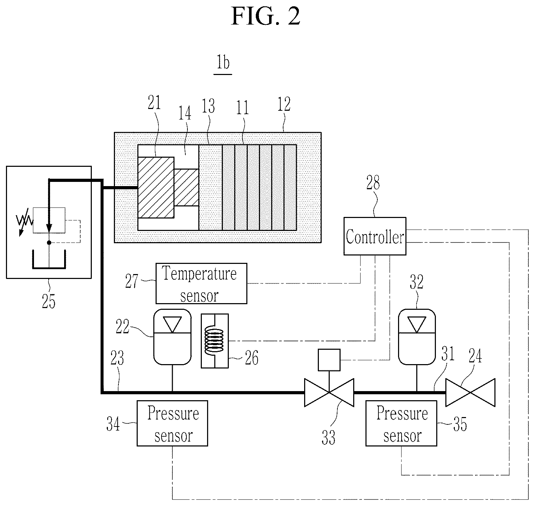

Opening and closing of the maintenance valve 24 may be controlled by the controller 28. For example, if a pressure inside the fluid pipe 23 lowers to a reference (or predetermined) value or less or a set period is reached, the controller 28 may open the maintenance valve 24 so that a fluid stored in a fluid tank is supplied to the inside of the fluid pipe 23. In some embodiments, the pressure maintenance device may further include a pressure sensor 34 (see, e.g., FIG. 2) configured to detect an internal pressure of the fluid pipe 23 or the accumulator 22. If the internal pressure of the fluid pipe 23 or the accumulator 22 detected by the pressure sensor lowers to the reference value or less, the controller 28 may open the maintenance valve 24 so that an additional fluid is supplied to the fluid pipe 23.

The pressure reducing valve 25 may be connected to a fluid outlet of the fluid pipe 23 to discharge the fluid inside the fluid pipe 23 to the outside of the fluid pipe 23. The pressure reducing valve 25 may be opened if the pressure inside the fluid pipe 23 exceeds a reference (or predetermined) value so that the fluid inside the fluid pipe 23 is discharged to the outside. The pressure reducing valve 25 may be closed if the pressure inside the fluid pipe 23 lowers to the reference value or less to stop the discharging of the fluid.

The fluid pipe 23 may maintain an airtight state except for when the maintenance valve 24 is opened so that the fluid is supplied to the inside of the fluid pipe 23 or if the pressure reducing valve 25 is opened so that the fluid inside the fluid pipe 23 is discharged to the outside. In some embodiments, when the maintenance valve 24 and the pressure reducing valve 25 are both closed, the fluid inside the fluid pipe 23 may be exchanged only between the hydraulic device 21 and the accumulator 22.

The heater 26 may heat the accumulator 22.

The temperature sensor 27 measures an outdoor air temperature (e.g., an outdoor temperature, an external or ambient temperature) outside the accumulator 22.

The controller 28 may detect the outdoor air temperature through the temperature sensor 27 and may adjust an electric current flowing through the heater 26 so that the heater heats the accumulator 22. To prevent a pressure change inside the accumulator 22 from occurring due to a temperature change inside the accumulator 22, the controller 28 may reduce or minimize a change in an internal temperature of the accumulator 22 by controlling an operation of the heater 26 according to the detected outdoor air temperature. Because energy necessary to raise 1 L nitrogen pressurized at 200 bar by 30 degrees Celsius is approximately 2 Wh (watt-hours) if nitrogen is charged inside the accumulator 22, a temperature change inside the accumulator 22 may be reduced or minimized with little energy.

According to the above-described embodiments, displacement of the battery cells 11 may be absorbed by the pressure maintenance device so that a fatigue load applied to the module housing 12 due to charging and discharging of the battery cells 11 is reduced or minimized. For example, even if swelling occurs due to deterioration during the life of the battery cells 11, a pressure inside the module housing 12 may be kept constant compared with an early life stage of the battery cells 11 so that structural deformation of the module housing 12 is reduced or minimized. In some embodiments, if the battery module is installed, a fastening force of the battery cells 11 may be improved by pressurizing the battery cells 11 by using the pressure maintenance device. In some embodiments, the accumulator 22, the heater 26, and the like may be used to respond to an external temperature variable, fluid leakage, or the like.

FIG. 2 is a schematic diagram of a battery system including a pressure maintenance device according to other embodiments of the present disclosure.

The same reference numerals used to describe the battery system 1b shown in FIG. 2 as those used to describe the battery system 1a shown in FIG. 1, described above, may denote the same component and a redundant description thereof is omitted.

Comparing the embodiment shown in FIG. 2 with the embodiment shown in FIG. 1, the battery system 1b may further include a supplemental pipe 31, an auxiliary accumulator (e.g., a supplemental accumulator) 32, a solenoid valve 33, and pressure sensors 34 and 35.

The supplemental pipe 31 may be a fluid passage between the solenoid valve 33, the auxiliary accumulator 32, and the maintenance valve 24.

The auxiliary accumulator 32 may store a fluid in a pressurized state. If the fluid is supplied to the supplemental pipe 31 through the maintenance valve 24, the auxiliary accumulator 32 may store the supplied fluid therein. If the solenoid valve 33 is opened so that a hydraulic pressure inside the supplemental pipe 31 lowers, the auxiliary accumulator 32 may supply the fluid to the supplemental pipe 31 by discharging the fluid stored in the auxiliary accumulator 32.

Opening of the solenoid valve 33 may be controlled by the controller 28, and flow of the fluid between the fluid pipe 23 and the supplemental pipe 31 may be controlled.

The pressure sensor 34 may be coupled to the fluid pipe 23 to detect an internal hydraulic pressure P1 of the fluid pipe 23. The pressure sensor 35 may be coupled to the supplemental pipe 31 to detect an internal hydraulic pressure P2 of the supplemental pipe 31.

The controller 28 may compare the pressures detected by the pressure sensors 34 and 35 and, when the internal hydraulic pressure P1 of the fluid pipe 23 is lower than the internal hydraulic pressure P2 of the supplemental pipe 31, may open the solenoid valve 33 so that the fluid of the supplemental pipe 31 flows into the fluid pipe 23. If the fluid is supplied from the supplemental pipe 31 to the fluid pipe 23, the hydraulic pressure inside the supplemental pipe 31 may be lowered so that the fluid stored in the accumulator 32 is discharged to the supplemental pipe 31.

In the above description, the opening of the solenoid valve 33 is controlled by using the pressure sensors 34 and 35 coupled to the fluid pipe 23 and the supplemental pipe 31, but this is merely an example. In another embodiment, the pressure sensors 34 and 35, used to determine whether the solenoid valve 33 should be opened, may be respectively coupled to the accumulators 22 and 32. For example, the pressure sensors 34 and 35 may respectively detect internal pressures of the accumulator 22 and the auxiliary accumulator 32, and the controller 28 may compare the internal pressures to determine whether the solenoid valve 33 should be opened. In some embodiments, if the internal pressure of the accumulator 22 becomes lower than the internal pressure of the auxiliary accumulator 32, the controller 28 may open the solenoid valve 33 so that the fluid of the supplemental pipe 31 flows into the fluid pipe 23.

According to embodiments of the present disclosure, the auxiliary accumulator 32 may be used to supplement the fluid if a pressure of an accumulator (e.g., a main or primary accumulator) 22 decreases so that a maintenance period is increased.

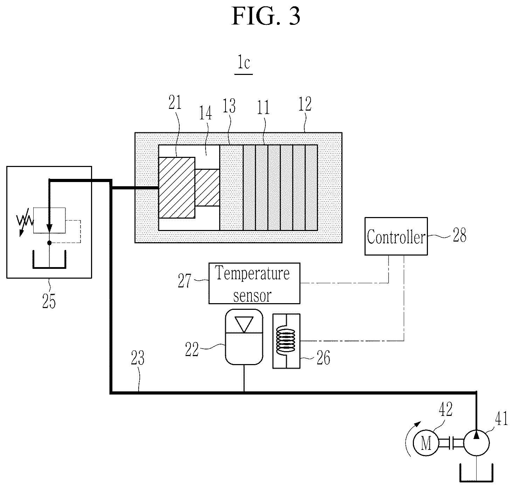

FIG. 3 is a schematic diagram of a battery system including a pressure maintenance device according to embodiments of the present disclosure.

The same reference numerals used to describe the battery system 1c shown in FIG. 3 as are used to describe the battery system 1a shown in FIG. 1, described above, may denote the same component and a redundant description thereof is omitted.

Comparing the embodiment shown in FIG. 3 with the embodiment shown in FIG. 1, the battery system 1c may further include a pump 41 for supplementing the fluid in the fluid pipe 23 and a motor 42 for driving the pump 41 instead of the maintenance valve 24.

If a pressure inside the fluid pipe 23 lowers to a reference (or predetermined) value or less or a set period is reached, the controller 28 may drive the pump 41 by using (or by controlling) the motor 42 so that a fluid stored in a fluid tank is supplied to the inside of the fluid pipe 23. In some embodiments, the pressure maintenance device may further include the pressure sensor 34 (see, e.g., FIG. 2) for detecting an internal pressure of the fluid pipe 23 or the accumulator 22. If the internal pressure of the fluid pipe 23 or the accumulator 22 detected by the pressure sensor lowers to the reference value or less, the controller 28 may drive the pump 41 so that additional fluid is supplied to the fluid pipe 23.

According to embodiments of the present disclosure, if the pressure maintenance device determines that fluid supplement is necessary to maintain pressure, the pressure maintenance device may drive the pump 41 to automatically supplement the fluid in the accumulator 22 even during driving of a vehicle to which the battery system is attached.

While embodiments of the present disclosure have been shown and described with reference to the accompanying drawings, the specific terms used herein are only for the purpose of describing these embodiments and are not intended to define the meanings thereof or be limiting of the scope of the present disclosure set forth in the claims. Therefore, a person of ordinary skill in the art will understand that various modifications and other equivalent embodiments of the present disclosure are possible. Consequently, the scope of the present disclosure must be determined based on the appended claims.

**Description of Some Reference Symbols**

| | | | |
|---|---|---|---|
| 1a, | 1b, 1c: battery system | 11: | battery cell |
| 12: | module housing | 13: | buffer plate |
| 21: | hydraulic device | 22: | accumulator |
| 23: | fluid pipe | 24: | maintenance valve |
| 25: | pressure reducing valve | 26: | heater |
| 27: | temperature sensor | 28: | controller |
| 31: | supplemental pipe | 32: | auxiliary accumulator |
| 33: | solenoid valve | 34, 35: | pressure sensor |
| 41: | pump | 42: | motor |

pressure sensor 34 (see, e.g., FIG. 2) for detecting an internal pressure of the fluid pipe 23 or the accumulator 22. If the internal pressure of the fluid pipe 23 or the accumulator 22 detected by the pressure sensor lowers to the reference value or less, the controller 28 may drive the pump 41 so that additional fluid is supplied to the fluid pipe 23.

According to embodiments of the present disclosure, if the pressure maintenance device determines that fluid supplement is necessary to maintain pressure, the pressure maintenance device may drive the pump 41 to automatically supplement the fluid in the accumulator 22 even during driving of a vehicle to which the battery system is attached.

While embodiments of the present disclosure have been shown and described with reference to the accompanying drawings, the specific terms used herein are only for the purpose of describing these embodiments and are not intended to define the meanings thereof. Therefore, a person of ordinary skill in the art will understand that various modifications and other equivalent embodiments of the present disclosure are possible. Consequently, the scope of the present disclosure must be determined based on the appended claims.

**Description of Some Reference Symbols**

| | | | |
|---|---|---|---|
| 1a, 1b, 1c: | battery system | 11: | battery cell |
| 12: | module housing | 13: | buffer plate |
| 21: | hydraulic device | 22: | accumulator |
| 23: | fluid pipe | 24: | maintenance valve |
| 25: | pressure reducing valve | 26: | heater |
| 27: | temperature sensor | 28: | controller |
| 31: | supplemental pipe | 32: | auxiliary accumulator |
| 33: | solenoid valve | 34, 35: | pressure sensor |
| 41: | pump | 42: | motor |

## Claims

1. A pressure maintenance device comprising:
a hydraulic device (21) inside a housing (12) of a battery module together with a plurality of battery cells (11), the hydraulic device (21) being configured to change its volume to offset a pressure change inside the housing (12) due to deformation of the plurality of battery cells (11);
an accumulator (22) connected to the hydraulic device (21) through a pipe (23), the accumulator (22) being configured to store fluid and to discharge the fluid to the pipe (23) or to store the fluid introduced from the pipe (23) according to a change in a volume of the hydraulic device (21);
a heater (26) configured to heat the accumulator (22)
comprising a temperature sensor (27) configured to detect the outdoor air temperature; and
a controller (28) configured to control the heater (26) according to an outdoor air temperature.

2. The pressure maintenance device as claimed in claim 1, wherein, when the plurality of battery cells (11) expand, the hydraulic device (21) is configured to contract to discharge the fluid to the pipe (23), and
when the plurality of battery cells (11) contract, the hydraulic device (21) is configured to expand by the fluid introduced from the pipe (23).

3. The pressure maintenance device as claimed in claim 1 or 2, wherein the hydraulic device (21) comprises a hydraulic cylinder or a hydraulic bag.

4. The pressure maintenance device as claimed in any one of claims 1 to 3, further comprising a maintenance valve (24) connected to the pipe (23), and
wherein the maintenance valve (24) is configured to be opened to supplement the fluid to the pipe (23).

5. The pressure maintenance device as claimed in any one of claims 1 to 4, further comprising a pressure reducing valve (25) connected to the pipe (23), and
wherein the pressure reducing valve (25) is configured to be opened when a pressure inside the pipe (23) exceeds a reference value to discharge the fluid from the pipe (23).

6. The pressure maintenance device as claimed in any one of claims 1 to 4, further comprising:
a supplemental pipe (31);
a solenoid valve (33) connected between the pipe (23) and the supplemental pipe (31) and configured to supply fluid of the supplemental pipe (31) to the pipe (23) when the solenoid valve (33) is opened; and
an auxiliary accumulator (32) configured to store fluid and to discharge the fluid to the supplemental pipe (31) when an internal pressure of the supplemental pipe (31) decreases due to the opening of the solenoid valve (33),
wherein the solenoid valve (33) is configured to be opened when an internal pressure of the pipe (23) is lower than the internal pressure of the supplemental pipe (31) by a reference value or more.

7. The pressure maintenance device as claimed in claim 6, further comprising a maintenance valve (24) connected to the supplemental pipe (31), and
wherein the maintenance valve (24) is configured to be opened to supplement the fluid to the supplemental pipe (31).

8. The pressure maintenance device as claimed in claim 6 or 7, further comprising:
a first pressure sensor (34) coupled to the pipe (23) and configured to detect the internal pressure of the pipe (23); and
a second pressure sensor (35) coupled to the supplemental pipe (31) and configured to detect the internal pressure of the supplemental pipe (31),
wherein the controller (28) is configured to open the solenoid valve (33) when a first pressure detected by the first pressure sensor (34) is lower than a second pressure detected by the second pressure sensor (35).

9. The pressure maintenance device as claimed in claim 6, 7, or 8, comprising:
a first pressure sensor (34) coupled to the accumulator (22) and configured to detect an internal pressure of the accumulator (22); and
a second pressure sensor (35) coupled to the auxiliary accumulator (32) and configured to detect an internal pressure of the auxiliary accumulator (32),
wherein the controller (28) is configured to open the solenoid valve (33) when a first pressure detected by the first pressure sensor (34) is lower than a second pressure detected by the second pressure sensor (35).

10. The pressure maintenance device as claimed in any one of claims 1 to 9, further comprising:
a pump (41) coupled to the pipe (23) and configured to supply additional fluid to the pipe (23); and
a motor (42) configured to drive the pump (41),
wherein the controller (28) is configured to control the motor (42) to drive the pump (41) when an internal pressure of the pipe (23) lowers to a reference value or less.

11. A battery system comprising:
the pressure maintenance device according to any one of claims 1 to 10; and
the battery module, the battery module comprising:
the plurality of battery cells (11) stacked adjacent to each other; and
the housing (12) having an airtight space in which the plurality of battery cells (11) and the hydraulic device (21) are arranged.

## Patentansprüche

1. Druckerhaltungsvorrichtung, die Folgendes umfasst:
eine hydraulische Vorrichtung (21) innerhalb eines Gehäuses (12) eines Batteriemoduls zusammen mit einer Vielzahl von Batteriezellen (11), wobei die hydraulische Vorrichtung (21) dafür konfiguriert ist, ihr Volumen zu verändern, um eine Druckveränderung innerhalb des Gehäuses (12) aufgrund einer Verformung der Vielzahl von Batteriezellen (11) auszugleichen,
einen Sammler (22), der durch ein Rohr (23) mit der hydraulischen Vorrichtung (21) verbunden ist, wobei der Sammler (22) dafür konfiguriert ist, gemäß einer Veränderung bei einem Volumen der hydraulischen Vorrichtung (21) Fluid zu speichern und das Fluid an das Rohr (23) abzugeben oder das Fluid, das von dem Rohr (23) eingeleitet wird, zu speichern,
eine Heizvorrichtung (26), die dafür konfiguriert ist, den Sammler (22) zu erwärmen,
umfassend einen Temperatursensor (27), der dafür konfiguriert ist, die Außenlufttemperatur zu erfassen, und
eine Steuerung (28), die dafür konfiguriert ist, die Heizvorrichtung (26) gemäß einer Außenlufttemperatur zu steuern.

2. Druckerhaltungsvorrichtung nach Anspruch 1, wobei, wenn sich die Vielzahl von Batteriezellen (11) ausdehnt, die hydraulische Vorrichtung (21) dafür konfiguriert ist, sich zusammenzuziehen, um das Fluid an das Rohr (23) abzugeben, und,
wenn sich die Vielzahl von Batteriezellen (11) zusammenzieht, die hydraulische Vorrichtung (21) dafür konfiguriert ist, sich durch das von dem Rohr (23) eingeleitete Fluid auszudehnen.

3. Druckerhaltungsvorrichtung nach Anspruch 1 oder 2, wobei die hydraulische Vorrichtung (21) einen Hydraulikzylinder oder eine Hydrauliktasche umfasst.

4. Druckerhaltungsvorrichtung nach einem der Ansprüche 1 bis 3, die ferner ein Erhaltungsventil (24) umfasst, das mit dem Rohr (23) verbunden ist, und
wobei das Erhaltungsventil (24) dafür konfiguriert ist, geöffnet zu werden, um das Fluid zu dem Rohr (23) zu ergänzen.

5. Druckerhaltungsvorrichtung nach einem der Ansprüche 1 bis 4, die ferner ein Druckminderungsventil (25) umfasst, das mit dem Rohr (23) verbunden ist, und
wobei das Druckminderungsventil (25) dafür konfiguriert ist, geöffnet zu werden, wenn ein Druck innerhalb des Rohres (23) einen Referenzwert überschreitet, um das Fluid aus dem Rohr (23) abzugeben.

6. Druckerhaltungsvorrichtung nach einem der Ansprüche 1 bis 4, die ferner Folgendes umfasst:
ein Ergänzungsrohr (31),
ein Magnetventil (33), das zwischen dem Rohr (23) und dem Ergänzungsrohr (31) angeschlossen und dafür konfiguriert ist, Fluid des Ergänzungsrohres (31) dem Rohr (23) zuzuführen, wenn das Magnetventil (33) geöffnet wird, und
einen Hilfssammler (32), der dafür konfiguriert ist, Fluid zu speichern und das Fluid an das Ergänzungsrohr (31) abzugeben, wenn ein Innendruck des Ergänzungsrohres (31) aufgrund der Öffnung des Magnetventils (33) abnimmt,
wobei das Magnetventil (33) dafür konfiguriert ist, geöffnet zu werden, wenn ein Innendruck des Rohres (23) um einen Referenzwert oder mehr niedriger ist als der Innendruck des Ergänzungsrohres (31).

7. Druckerhaltungsvorrichtung nach Anspruch 6, die ferner ein Erhaltungsventil (24) umfasst, das mit dem Ergänzungsrohr (31) verbunden ist, und
wobei das Erhaltungsventil (24) dafür konfiguriert ist, geöffnet zu werden, um das Fluid zu dem Ergänzungsrohr (31) zu ergänzen.

8. Druckerhaltungsvorrichtung nach Anspruch 6 oder 7, die ferner Folgendes umfasst:
einen ersten Drucksensor (34), der an das Rohr (23) gekoppelt und dafür konfiguriert ist, den Innendruck des Rohres (23) zu erfassen, und
einen zweiten Drucksensor (35), der an das Ergänzungsrohr (31) gekoppelt und dafür konfiguriert ist, den Innendruck des Ergänzungsrohres (31) zu erfassen,
wobei die Steuerung (28) dafür konfiguriert ist, das Magnetventil (33) zu öffnen, wenn ein durch den ersten Drucksensor (34) erfasster erster Druck niedriger ist als ein durch den zweiten Drucksensor (35) erfasster zweiter Druck.

9. Druckerhaltungsvorrichtung nach Anspruch 6, 7 oder 8, die Folgendes umfasst:
einen ersten Drucksensor (34), der an den Sammler (22) gekoppelt und dafür konfiguriert ist, einen Innendruck des Sammlers (22) zu erfassen, und
einen zweiten Drucksensor (35), der an den Hilfssammler (32) gekoppelt und dafür konfiguriert ist, einen Innendruck des Hilfssammlers (32) zu erfassen,
wobei die Steuerung (28) dafür konfiguriert ist, das Magnetventil (33) zu öffnen, wenn ein durch den ersten Drucksensor (34) erfasster erster Druck niedriger ist als ein durch den zweiten Drucksensor (35) erfasster zweiter Druck.

10. Druckerhaltungsvorrichtung nach einem der Ansprüche 1 bis 9, die ferner Folgendes umfasst:
eine Pumpe (41), die an das Rohr (23) gekoppelt und dafür konfiguriert ist, dem Rohr (23) zusätzliches Fluid zuzuführen, und
einen Motor (42), der dafür konfiguriert ist, die Pumpe (41) anzutreiben,
wobei die Steuerung (28) dafür konfiguriert ist, den Motor (42) zu steuern, um die Pumpe (41) anzutreiben, wenn sich ein Innendruck des Rohres (23) bis zu einem Referenzwert oder weniger absenkt.

11. Batteriesystem, das Folgendes umfasst:
die Druckerhaltungsvorrichtung nach einem der Ansprüche 1 bis 10; und
das Batteriemodul, wobei das Batteriemodul Folgendes umfasst:
die Vielzahl von Batteriezellen (11), die zueinander benachbart gestapelt sind, und
das Gehäuse (12), das einen luftdichten Raum aufweist, in dem die Vielzahl von Batteriezellen (11) und die hydraulische Vorrichtung (21) angeordnet sind.

## Revendications

1. Dispositif de maintien de pression, comprenant :
un dispositif hydraulique (21) à l'intérieur d'un boîtier (12) d'un module de batterie, ensemble avec une pluralité d'éléments de batterie (11), le dispositif hydraulique (21) étant configuré pour changer son volume pour compenser un changement de pression à l'intérieur du boîtier (12) par suite d'une déformation de la pluralité d'éléments de batterie (11) ;
un accumulateur (22) connecté au dispositif hydraulique (21) par l'intermédiaire d'un tuyau (23), l'accumulateur (22) étant configuré pour stocker du fluide et pour décharger le fluide vers le tuyau (23), ou pour stocker le liquide introduit à partir du tuyau (23) selon un changement dans un volume du dispositif hydraulique (21) ;
un dispositif de chauffage (26) configuré pour chauffer l'accumulateur (22) ;
comprenant un capteur de température (27) configuré pour détecter la température de l'air extérieur ; et
un dispositif de commande (28) configuré pour commander le dispositif de chauffage (26) selon une température de l'air extérieur.

2. Dispositif de maintien de pression selon la revendication 1, dans lequel, lorsque la pluralité d'éléments de batterie (11) se dilatent, le dispositif hydraulique (21) est configuré pour se contracter pour décharger le fluide vers le tuyau (23) ; et
lorsque la pluralité d'éléments de batterie (11) se contractent, le dispositif hydraulique (21) est configuré pour se dilater par le fluide introduit à partir du tuyau (23).

3. Dispositif de maintien de pression selon la revendication 1 ou 2, dans lequel le dispositif hydraulique (21) comprend un cylindre hydraulique ou un sac hydraulique.

4. Dispositif de maintien de pression selon l'une quelconque des revendications 1 à 3, comprenant en outre une soupape de maintien (24) connectée au tuyau (23) ; et
dans lequel la soupape de maintien (24) est configurée pour être ouverte pour supplémenter le fluide s'écoulant vers le tuyau (23).

5. Dispositif de maintien de pression selon l'une quelconque des revendications 1 à 4, comprenant en outre une soupape de réduction de pression (25) connectée au tuyau (23) ; et
dans lequel la soupape de réduction de pression (25) est configurée pour être ouverte lorsqu'une pression à l'intérieur du tuyau (23) dépasse une valeur de référence, pour décharger le fluide à partir du tuyau (23).

6. Dispositif de maintien de pression selon l'une quelconque des revendications 1 à 4, comprenant en outre :
un tuyau supplémentaire (31) ;
une électrovanne (33) connectée entre le tuyau (23) et le tuyau supplémentaire (31) et configurée pour amener du fluide du tuyau supplémentaire (31) vers le tuyau (23) lorsque l'électrovanne (33) est ouverte ; et
un accumulateur auxiliaire (32) configuré pour stocker du fluide et pour décharger le fluide vers le tuyau supplémentaire (31) lorsqu'une pression interne du tuyau supplémentaire (31) est réduite par suite de l'ouverture de l'électrovanne (33) ;
dans lequel l'électrovanne (33) est configurée pour être ouverte lorsqu'une pression interne du tuyau (23) est inférieure à la pression interne du tuyau supplémentaire (31) d'une valeur de référence ou plus.

7. Dispositif de maintien de pression selon la revendication 6, comprenant en outre une soupape de maintien (24) connectée au tuyau supplémentaire (31), et
dans lequel la soupape de maintien (24) est configurée pour être ouverte pour supplémenter le fluide s'écoulant vers le tuyau supplémentaire (31).

8. Dispositif de maintien de pression selon la revendication 6 ou 7, comprenant en outre :
un premier capteur de pression (34) couplé au tuyau (23) et configuré pour détecter la pression interne du tuyau (23) ; et
un deuxième capteur de pression (35) couplé au tuyau supplémentaire (31) et configuré pour détecter la pression interne du tuyau supplémentaire (31) ;
dans lequel le dispositif de commande (28) est configuré pour ouvrir l'électrovanne (33) lorsqu'une première pression détectée par le premier capteur de pression (34) est inférieure à une deuxième pression détectée par le deuxième capteur de pression (35).

9. Dispositif de maintien de pression selon la revendication 6, 7 ou 8, comprenant :
un premier capteur de pression (34) couplé à l'accumulateur (22) et configuré pour détecter une pression interne de l'accumulateur (22) ;
un deuxième capteur de pression (35) couplé à l'accumulateur auxiliaire (32) et configuré pour détecter une pression interne de l'accumulateur auxiliaire (32) ;
dans lequel le dispositif de commande (28) est configuré pour ouvrir l'électrovanne (33) lorsqu'une première pression détectée par le premier capteur de pression (34) et inférieure à une deuxième pression détectée par le deuxième capteur de pression (35).

10. Dispositif de maintien de pression selon l'une quelconque des revendications 1 à 9, comprenant en outre :
une pompe (41) couplée au tuyau (23) et configurée pour amener du fluide additionnel vers le tuyau (23) ; et
un moteur (42) configuré pour entraîner la pompe (41) ;
dans lequel le dispositif de commande (28) est configuré pour commander le moteur (42) pour entraîner la pompe (41) lorsqu'une pression interne du tuyau (23) est réduite à une valeur de référence ou moins.

11. Système de batterie, comprenant :
le dispositif de maintien de pression selon l'une quelconque des revendications 1 à 10 ; et
le module de batterie, le module de batterie comprenant :
la pluralité d'éléments de batterie (11) empilés les uns sur les autres de manière adjacente ; et
le boîtier (12) comportant un espace étanche à l'air dans lequel sont agencés la pluralité d'éléments de batterie (11) et le dispositif hydraulique (21).
